# EUROPÄISCHE PATENTSCHRIFT

(11) **EP 4 131 139 B1**
(45) Veröffentlichungstag und Bekanntmachung des Hinweises auf die Patenterteilung: **26.11.2025**
(21) Anmeldenummer: 21189252.6
(22) Anmeldetag: 03.08.2021
(51) Int. Cl.: B25J 9/16, G06T 7/50, G06T 7/70, G06T 7/20, G05B 19/4061

(54) **SENSORANORDNUNG UND VERFAHREN ZUM ABSICHERN EINES ÜBERWACHUNGSBEREICHS**
SENSOR ASSEMBLY AND METHOD FOR SECURING A SUPERVISED AREA
DISPOSITIF CAPTEUR ET PROCÉDÉ DE SÉCURISATION D'UNE ZONE DE SURVEILLANCE

(43) Veröffentlichungstag der Anmeldung: 08.02.2023
(73) Patentinhaber: SICK AG, 79183 Waldkirch (DE)
(72) Erfinder: Hammes, Dr. Markus, 79117 Freiburg (DE); Löffler, Nicolas, 79238 Ehrenkirchen (DE)

(56) Entgegenhaltungen:
- EP-A1- 3 611 422
- EP-A1- 3 715 065
- US-A1- 2015 294 496
- TIMO MALM ET AL: "Dynamic safety system for collaboration of operators and industrial robots", CENTRAL EUROPEAN JOURNAL OF ENGINEERING, vol. 9, no. 1, 7 March 2019 (2019-03-07), Heidelberg, pages 61 - 71, XP055712921, ISSN: 1896-1541, DOI: 10.1515/eng-2019-0011

## Beschreibung

Die Erfindung betrifft eine Sensoranordnung und ein Verfahren zum Absichern eines Überwachungsbereichs nach dem Oberbegriff von Anspruch 1 beziehungsweise 14.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit oder Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet.

Patentschrift EP3715065A1 beschreibt eine Roboterüberwachung, wobei eine 3D-Kamera einen Überwachungsbereich erfasst und Bilder aufnimmt und aus den Bildern sich bewegende, zusammenhängende Objekte erkennt und bestimmt (zum Beispiel Personen). Diese Erkennung erfolgt in einer Auswerteeinheit, wobei aufeinanderfolgende Bilder verglichen werden, um bewegte Objekte im Gegensatz zu statischen Objekten zu bestimmen. Und dann bei Detektion von bewegten Objekten, wird die Sicherheitsmaßnahme ergriffen.

In der Sicherheitstechnik beziehungsweise für den Personenschutz eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS) oder IEC61508. Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile.

Das gängige Absicherungskonzept sieht vor, dass Schutzbereiche konfiguriert werden, die während des Betriebs der Maschine vom Bedienpersonal nicht betreten werden dürfen. Erkennt der Sensor einen unzulässigen Schutzbereichseingriff, etwa einen Körper eines Werkers, so löst er einen sicherheitsgerichteten Halt der Maschine aus. In einigen Fällen werden den Schutzbereichen zusätzliche Warnfelder vorgelagert, um eine Person noch rechtzeitig an einer Schutzbereichsverletzung zu hindern oder um vorsorglich die Arbeitsgeschwindigkeit der Maschine zu verringern. Schutzbereiche müssen, um allen denkbaren Fällen gerecht zu werden, relativ groß ausgelegt werden, so dass es vergleichsweise früh zu einer Systemreaktion kommt, welche die Produktivität reduziert.

Schutzbereiche begrenzen die Zusammenarbeit mit Maschinen, insbesondere mit Robotern (MRK, Mensch-Roboter-Kollaboration). Relevante Normen in diesem Zusammenhang sind beispielsweise die ISO 10218 für Industrieroboter oder die ISO 15066 für kollaborierende Roboter. In der MRK sollten Sicherheitsabstände möglichst klein und eventuell sogar situationsangepasst konfiguriert werden, natürlich unter der Vorgabe, dass die Sicherheit gewährleistet bleibt. Die Normen ISO 13854, ISO 13855, ISO 13857 befassen sich mit der Festlegung von Sicherheitsabständen.

Ein Problemfeld in diesen Sicherheitsanordnungen ist der Wiederanlauf der gefährlichen Maschine (z.B. Industrieroboter) nach einer sicherheitsgerichteten Abschaltung. Ein Wiederanlauf sollte möglichst schnell und am besten automatisch erfolgen, um wertvolle Produktionszeit zu sparen, also die Verfügbarkeit der Maschine zu erhöhen. Um eine möglichst große Produktivität einer Anlage oder Maschine zu erzielen, sollten alle nicht notwendigen manuellen Eingriffe vermieden werden. Ein besonderer Fall in diesem Sinne ist der Wiederanlauf einer Maschine, nachdem diese durch einen Sicherheitseingriff gestoppt wurde. In vielen Anwendungen ist ein manuelles Rücksetzen der Schutzeinrichtung notwendig. Die Maschine kann erst weiter betrieben werden, wenn sich eine Person vor Ort davon überzeugt hat, dass der Gefahrenbereich frei von Personen ist und die Maschine manuell, bspw. über einen Rücksetztaster, frei gibt.

Dieser zusätzliche Aufwand muss betrieben werden, weil zum Beispiel Teile des Gefahrenbereichs nicht durch den Sensor einsehbar sind oder weil während des Maschinenstopps Positionen und Orientierungen von Objekten verändert wurden, die für eine einfache Schutzbereichsfunktion nicht von einer Person unterscheidbar wären (z.B. eine eingebrachte oder verrückte Palette, die bezüglich der Sicherheit irrelevant ist).

Dieses notwendige Übel des manuellen Wiederanlaufs wird derzeit in Kauf genommen, weil bisher keine befriedigenden technischen Lösungen für einen automatischen Wiederanlauf vorliegen.

Ein solcher manueller Wiederanlauf schränkt die Produktivität einer Maschine oder Anlage dadurch ein, dass immer eine Person zur Verfügung stehen muss, um den Wiederanlauf zu veranlassen. Wenn die Person nach dem Sicherheitseingriff erst verzögert an die Maschine gelangen kann, steht die Maschine in dieser Zeit still.

Es ist daher Aufgabe der Erfindung, die Überwachung einer Maschine dahingehend zu verbessern, dass die Verfügbarkeit erhöht wird und insbesondere ein Wiederanlauf derart verbessert wird, dass Zeit eingespart werden kann und insbesondere der Wiederanlauf automatisiert ablaufen kann.

Diese Aufgabe wird durch eine Sensoranordnung und ein Verfahren zum Absichern eines Überwachungsbereichs an einer Maschine nach Anspruch 1 beziehungsweise 14 gelöst.

Eine Überwachungsbereich im Sinne dieser Erfindung ist zumeist Raumbereich, in dem eine potentielle Gefahr für Leib und Leben einer Person besteht, wobei die Gefahr von der Maschine ausgeht. Die Maschine selbst und ihr Arbeitsbereich bilden somit eine Gefahrenstelle. Personen dürfen sich im Überwachungsbereich nicht aufhalten, weil sonst die Gefahr zu groß ist, dass es zu einem Unfall kommt. Ein Überwachungsbereich kann auch ein Schleusen- oder Durchtrittsbereich sein, den eine Person passieren muss, um in einen Gefahrenbereich zu gelangen. Diesen Schleusenbereich kann auch ein mobiler Roboter, wie beispielsweise ein autonomes Fahrzeug (AGV), passieren.

Mindestens eine 3-D Kamera erfasst fortlaufend Objekte in dem Überwachungsbereich und erzeugt 3-D Bilder des Überwachungsbereichs. Es sind verschiedene Technologien für eine 3-D Kamera bekannt, wie ein Lichtlaufzeitprinzip mit direkter Laufzeitmessung von Lichtsignalen oder Phasenmessung oder eine Entfernungsschätzung aus Helligkeiten oder Fokuslagen (Depth from Focus, Depth from Defocus) oder ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen. Die Kamera ist vorzugsweise fehlersicher ausgebildet, also für eine sicherheitstechnische Anwendung ausgelegt, und erfüllt dafür die einleitend genannten oder entsprechende Normen, um eine gefahrbringende Maschine abzusichern.

Eine Steuer- und Auswerteeinheit wertet die 3-D Bilder aus und bestimmt die Anwesenheit oder Positionen der erfassten Objekte, insbesondere aus dem Empfangssignal eines Lichtempfängers der 3-D Kamera. Wird demnach die momentane Position als gefährlich bewertet, etwa weil ein Objekt überhaupt im Überwachungsbereich sich befindet und/oder einer Gefahrenstelle zu nahe kommt, so wird eine sicherheitsgerichtete Reaktion der Maschine eingeleitet. Die Steuer- und Auswerteeinheit bezeichnet hierbei analoge Schaltungen oder digitale Auswertungsbausteine der 3-D Kamera selbst oder anderer Vorrichtungen der Sensoranordnung. Eine Minimalkonfiguration der Sensoranordnung ist demnach eine einzelne 3-D Kamera mit interner Steuer- und Auswerteeinheit.

Kern der Erfindung ist eine Wiederanlauffunktion nach Auslösung einer sicherheitsgerichteten Reaktion der Maschine, beispielsweise einer Abschaltung. Dazu ist eine Pufferspeichereinheit vorgesehen, in der stets eine bestimmte Anzahl zuletzt aufgenommener 3-D Bilder abgespeichert sind. Die Pufferspeichereinheit kann zum Beispiel in der Art eines Ringspeichers ausgebildet sein. Wenn jetzt die sicherheitsgerichtete Reaktion eingeleitet wurde, wird in der Steuer- und Auswerteeinheit aus den gespeicherten Bildern eine 3-D Referenzkarte des Überwachungsbereichs erstellt. Damit ist die Situation unmittelbar vor der sicherheitsgerichteten Abschaltung quasi festgehalten. Dann werden weiter 3-D Bilder aufgenommen und in einer Voxelidentifikationseinheit diejenigen Voxel identifiziert bzw. gekennzeichnet, deren Koordinaten von denen der entsprechenden Voxel der Referenzkarte um eine vorgegebene Distanz abweichen. Damit werden diejenigen Objekte identifiziert, deren Position sich nach der sicherheitsgerichteten Reaktion noch ändert. Nur diese Objekte müssen weiter ausgewertet werden, denn alle anderen Bereiche oder Objekte im Überwachungsbereich sind statisch und somit im Überwachungsbereich erlaubt, weil sie nicht zur sicherheitsgerichteten Reaktion geführt haben. In einer Bewegungserkennungseinheit werden dann die zuvor identifizierten Voxel daraufhin untersucht, ob diese im Verlauf einer festgelegten Anzahl von weiteren aktuellen Bildern, Positionsänderungen aufzeigen, die über einer festgelegten Schwelle liegen. Es wird also damit herausgefunden, ob die Objekte oder wenigstens Teilbereiche der Objekte sich bewegen. Damit wird eine Unterscheidung zwischen statischen Objekten und Personen möglich. Dies ist also eine Personenerkennung. Wird festgestellt, dass keine Person sich im Überwachungsbereich befindet oder sich nicht mehr befindet, kann die Maschine gefahrlos wieder anlaufen. Dazu wird an einem Ausgang ein Wiederanlaufsignal für die Maschine ausgeben.

In der erfindungsgemäßen Ausgestaltung ermöglichen die 3-D Daten die sichere Detektion von Personen mit Hilfe von sehr kleinen Bewegungen, die ein Mensch aufgrund von Atembewegungen, kleiner Gewichtsverlagerungen oder dergleichen permanent ausführt. Solche kleinen Bewegungen werden in dieser Anmeldung auch als Mikrobewegungen bezeichnet. Eine so erfolgende Personendetektion ist zusätzlich zu der fehlersicheren Grundfunktion von unzulässigen Objekten im Überwachungsbereich in die Sensoranordnung integriert.

Die wichtigste Besonderheit dieser neuen Personendetektionsfunktion ist es, dass zwischen statischen Objekten und Personen unterschieden werden kann. Damit ist der besondere Vorteil verbunden, dass durch den durch die Erfindung erst möglichen automatischen Wiederanlauf erheblich Zeit gespart werden kann und die Verfügbarkeit somit erhöht ist, um eine möglichst große Produktivität einer Anlage oder Maschine zu erzielen. Es werden alle nicht notwendigen manuellen Eingriffe vermieden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

In einer vorteilhaften Ausgestaltung der Erfindung liegt die Schwelle für die Bewegungserkennung bei 10 mm. Dieser Wert ist ein Kompromiss zwischen der möglichen Auflösung der 3-D Kamera, die möglichst grob sein sollte, damit die Kamera kostengünstig bleiben kann und dem Wunsch der Erkennung von kleinsten Bewegungen, zum Beispiel durch das Atmen verursachter Körperbewegungen.

Neben dem Wiederanlaufsignal ist in Weiterbildung der Erfindung ein Personenerkennungssignal ausgebbar, wenn die Bewegungserkennungseinheit eine Person erkannt hat, also Bewegungen erkennt, die über der festgelegten Schwelle liegen.

Zur Erhöhung der Robustheit gegenüber Pixelrauschen, kann es sinnvoll sein, dass in der Bewegungserkennungseinheit die Absolutwerte der Positionsänderungen eines identifizierten Voxels von Bild zu Bild summiert werden und die Schwelle eine fest hinterlegte Voxelschwelle ist, um das Bewegungserkennungssignal (Personenerkennungssignal) auszugeben und/oder das Wiederanlaufsignal zu unterdrücken, wenn die Summe der Absolutwerte der Positionsänderungen oberhalb der Voxelschwelle liegt. Damit führt nicht sofort jede Änderung in dem Positionswert eines Voxels zu einer Bewegungserkennung, sondern erst ein ausreichend häufiges Auftreten von Positionsänderungen.

Zur Vereinfachung kann es weiter sinnvoll sein, dass in der Bewegungserkennungseinheit die Absolutwerte der Positionsänderungen aller identifizierten Voxel von Bild zu Bild summiert werden und die Schwelle eine fest hinterlegte Summenschwelle ist, um das Bewegungserkennungssignal (Personenerkennungssignal) auszugeben und/oder das Wiederanlaufsignal zu unterdrücken, wenn die Summe der Absolutwerte der Positionsänderungen oberhalb der Summenschwelle liegt. Diese Summenbetrachtung hat den Vorteil, dass nicht bereits kleinste Positionsänderungen beispielsweise nur eines einzigen Voxels als Bewegung erkannt werden, sondern es müssen mehrere Voxel (eben die Summe) die Bewegung "erkennen".

In weiterer Ausgestaltung der Erfindung wird die Voxelidentifikation vereinfacht, wenn die 3-D Kamera ausgebildet ist, ein zusätzliches optisches Merkmal, z.B. Farbe, Helligkeit, Reflektivität, zu erfassen, das als zusätzliches Kriterium zur Identifikation der Voxel in der Voxelidentifikationseinheit dient. Weiter kann die Absolutposition der Voxel in Bezug auf ein konfiguriertes Schutzvolumen als zusätzliches Merkmal ausgewertet werden. Dadurch kann die Robustheit verbessert werden, denn es reicht, wenn nur dort, wo das konfigurierte Schutzvolumen verletzt ist, die Analyse von Mikrobewegungen ausgeführt wird.

In vorteilhafter Weise sind die Pufferspeichereinheit, die Voxelidentifikationseinheit und die Bewegungserkennungseinheit Teile der Steuer- und Auswerteeinheit. Das verkürzt nicht nur die Signalwege, sondern erhöht auch die Kompaktheit.

Die Sensoranordnung weist bevorzugt eine Sicherheitssteuerung auf, in der zumindest ein Teil der Steuer- und Auswerteeinheit implementiert ist. Somit wird die Steuer- und Auswertungsfunktionalität in einen internen Teil innerhalb der 3-D Kamera und einen externen Teil in der Sicherheitssteuerung aufgeteilt. Beide Extreme mit ganz autarker 3-D Kamera, die diese Funktionalität selbst aufweist und nur das sicherheitsgerichtete Signal ausgibt, oder einer lediglich rohe Messsignale liefernden 3-D Kamera sind vorstellbar.

Die Sensoranordnung umfasst bevorzugt einen Zusatzsensor, insbesondere einen Radarsensor, der Bewegungen von Objekten im Überwachungsbereich erfasst. Dadurch kann die Sicherheit erhöht werden, nämlich indem ein weiterer Sensor mit anderer Messtechnik ebenfalls eine Bewegungserkennung durchführt. Ein Radarsensor hat allerdings den Nachteil, dass er keine Positionsbestimmung liefern kann, was hier aber unerheblich ist, denn die Positionsbestimmung erfolgt bereits mit der 3-D Kamera. Der Radarsensor dient lediglich der Erhöhung der Sicherheit, indem er die entscheidende Funktion der Bewegungserkennung redundant und diversitär durchführt.

Vorteilhafterweise ist die Steuer- und Auswerteeinheit fehlersicher ausgebildet.

In Weiterbildung der Erfindung ist vorgesehen, dass in der Pufferspeichereinheit die Variable N gleich 10 oder größer ist. Dies ist ein sinnvoller Kompromiss zwischen schneller Speicherung möglichst wenig Bilder und Genauigkeit der Referenzkarte aufgrund von möglichst vielen Bildern.

Vorteilhafterweise erfolgt die fortlaufende Erfassung von 3-D Bildern in einem festen zeitlichen Raster.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer 3D-Kamera und ihres Überwachungsbereichs;
- Fig. 2: eine schematische Darstellung der Überwachung;
- Fig. 3: eine schematische Darstellung der Überwachung in einer anderen Situation.

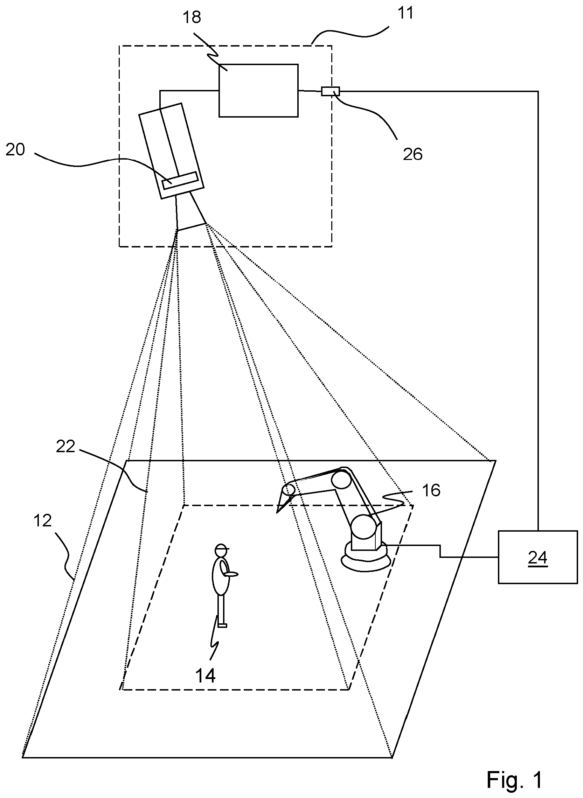

Fig. 1 zeigt in einer schematischen dreidimensionalen Darstellung den allgemeinen Aufbau einer erfindungsgemäßen Sensoranordnung 10 mit einer 3-D Kamera zur Aufnahme einer Tiefenkarte in einer typische Überwachungssituation. Mindestens eine 3-D Kamera 11 erfasst fortlaufend Objekte 14 und 16 in ihrem Sichtbereich 12 und erzeugt 3-D Bilder des Sichtbereichs 12. Es sind verschiedene Technologien für eine 3-D Kamera bekannt, wie ein Lichtlaufzeitprinzip mit direkter Laufzeitmessung von Lichtsignalen oder Phasenmessung oder eine Entfernungsschätzung aus Helligkeiten oder Fokuslagen (Depth from Focus, Depth from Defocus) oder ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen. Die 3-D-Kamera 11 ist vorzugsweise fehlersicher ausgebildet, also für eine sicherheitstechnische Anwendung ausgelegt, und erfüllt dafür die einleitend genannten oder entsprechende Normen, um eine gefahrbringende Maschine abzusichern.

Eine Steuer- und Auswerteeinheit 18 wertet die 3-D Bilder aus und bestimmt die Positionen der erfassten Objekte 14 und 16, insbesondere aus dem Empfangssignal eines Lichtempfängers 20 der 3-D Kamera 11. Die Steuer- und Auswerteeinheit 18 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die sich bevorzugt in der 3D-Kamera 11 befinden, die aber auch beliebig auf interne und externe Komponenten verteilbar sind, wobei externe Komponenten auch über Netzwerk oder eine Cloud eingebunden sein können, soweit Latenzen beherrscht oder toleriert werden können. Da eine 3-D Auswertung, also das Erzeugen einer Tiefenkarte und deren Auswertung, sehr rechenintensiv ist, wird vorzugsweise eine zumindest teilweise parallele Architektur gebildet.

Innerhalb des Sichtbereich 12 ist ein Überwachungsbereich 22 definiert, in dem sich beispielsweise eine Person, hier Objekt 14, nicht befinden darf, weil ansonsten die Person 14 der Gefahrenstelle, also der Maschine 16 zu nahe käme. Tritt die Person 14 dennoch in den Überwachungsbereich 22 ein, wird die momentane Position als gefährlich bewertet und eine sicherheitsgerichtete Reaktion der Maschine 16 über eine Maschinensteuerung 24 eingeleitet. Zu diesem Zweck weist die Steuer- und Auswerteeinheit 18 einen Sicherheitsausgang 26 auf, über den ein Sicherheitssignal an die Maschinensteuerung 24 geführt werden kann.

Die Steuer- und Auswerteeinheit 18 bezeichnet hierbei analoge Schaltungen oder digitale Auswertungsbausteine der 3-D Kamera 11 selbst oder anderer Vorrichtungen der Sensoranordnung. Eine Minimalkonfiguration der Sensoranordnung ist demnach eine einzelne 3-D Kamera mit interner Steuer- und Auswerteeinheit, wie das in Fig. 1 schematisch dargestellt ist.

Kern der Erfindung ist eine Wiederanlauffunktion nach Auslösung einer sicherheitsgerichteten Reaktion der Maschine 16, beispielsweise einer Abschaltung. Dazu ist eine Pufferspeichereinheit 28 vorgesehen, beispielsweise in der Steuer- und Auswerteeinheit 18. In der Pufferspeichereinheit 28 werden im laufenden Betrieb fortlaufend eine bestimmte Anzahl N der zuletzt aufgenommenen 3-D Bilder abgespeichert. Die Pufferspeichereinheit 28 kann zum Beispiel in der Art eines Ringspeichers ausgebildet sein.

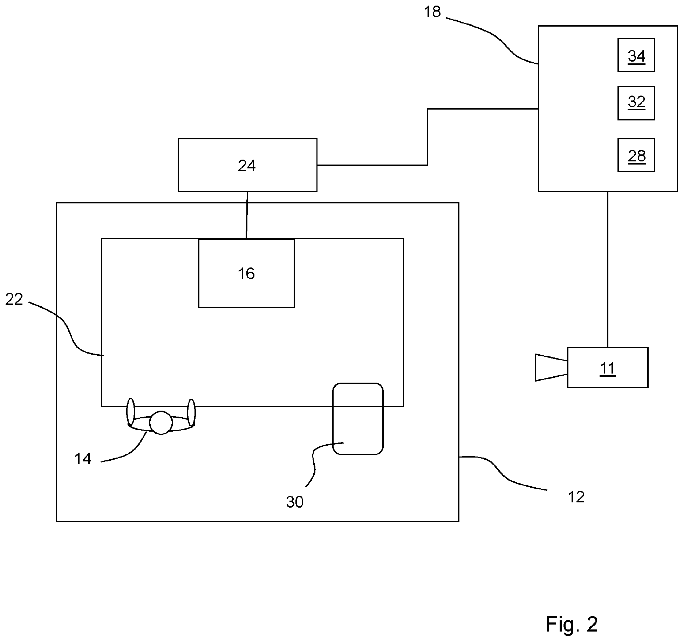

Wenn die sicherheitsgerichtete Reaktion eingeleitet wurde, weil ein unzulässiges Objekt, beispielsweise eine Person 14, im Überwachungsbereich 22 detektiert wurde, wie in Fig. 2 angedeutet, wird in der Steuer- und Auswerteeinheit 18 aus den gespeicherten N Bildern eine 3-D Referenzkarte des Überwachungsbereichs 22 erstellt. Damit ist die Situation unmittelbar vor der sicherheitsgerichteten Abschaltung quasi festgehalten. Also die Konfiguration, wie sie in Fig. 2 dargestellt ist. In diesem Fall befindet sich auch noch ein Teil eines zulässigen Objekts 30, beispielsweise einer mit Material beladenen Palette, im Überwachungsbereich 22. Die Variable N ist bevorzugt gleich 10 oder größer. Dies ist ein sinnvoller Kompromiss zwischen schneller Speicherung möglichst wenig Bilder und Genauigkeit der Referenzkarte aufgrund von möglichst vielen Bildern.

Nach der Abschaltung werden von der 3-D-Kamera 11 weiter 3-D Bilder fortlaufend aufgenommen. Diese neuen 3-D Bilder werden zusammen mit der Referenzkarte in einer Voxelidentifikationseinheit 32 weiterverarbeitet und diejenigen Voxel identifiziert bzw. gekennzeichnet, deren Koordinaten von denen der entsprechenden Voxel der Referenzkarte um eine vorgegebene Distanz abweichen.

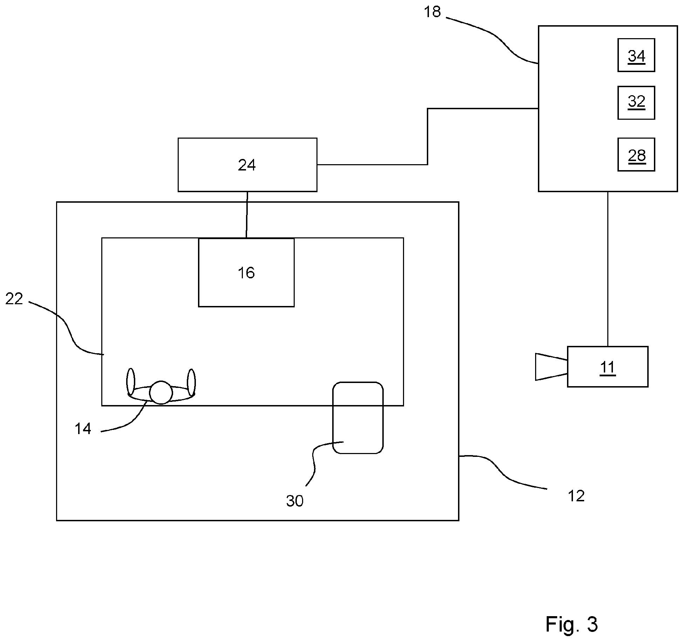

Fig. 3 soll die Situation aus Fig. 2 zu einem etwas späteren Zeitpunkt zeigen. Zwischen dem Zeitpunkt der Abschaltung (Fig. 2) und dem späteren Zeitpunkt (Fig. 3) hat sich nur die Position der Person 1 im Überwachungsbereich 22 noch verändert. In der Voxelidentifikationseinheit 32 wird also dieses Objekt 14 oder besser gesagt die Teilbereiche dieses Objekts, die im Überwachungsbereich 22 liegen, identifiziert, weil sich deren Position nach der sicherheitsgerichteten Reaktion noch geändert haben. Alle anderen Bereiche oder Objekte im Überwachungsbereich sind statisch und somit im Überwachungsbereich erlaubt, weil sie nicht zur sicherheitsgerichteten Reaktion geführt haben.

Dann werden in einer Bewegungserkennungseinheit 34 die zuvor identifizierten Voxel daraufhin untersucht, ob diese im Verlauf einer festgelegten Anzahl von weiteren aktuellen Bildern, Positionsänderungen aufzeigen, die über einer festgelegten Schwelle liegen. Es wird also damit herausgefunden, ob die Objekte oder wenigstens Teilbereiche des Objekt 14 sich bewegen. Damit wird eine Unterscheidung zwischen statischen Objekten 30 und Personen 14 möglich. Dies ist also eine Personenerkennung. Dieses funktioniert deshalb, weil eine Person nicht statisch bleiben kann. Selbst wenn die Person im Überwachungsbereich stürzt und "regungslos" liegen bleibt, werden dennoch kleinere Bewegungen allein durch die Atmung auftreten, die die erfindungsgemäße Sensoranordnung identifiziert. Die Schwelle zur Erkennung einer Bewilligung liegt bevorzugt bei 10 mm. Es werden damit Bewegungen erkannt, die mindestens eine Positionsveränderung von 10 mm betragen.

Wird festgestellt, dass keine Person 14 oder zumindest keine Teilbereiche dieser Person 14 sich im Überwachungsbereich 22 befinden oder sich nicht mehr befinden, kann die Maschine 16 gefahrlos wieder anlaufen. Dann wird an dem Ausgang 26 ein Wiederanlaufsignal für die Maschine 16 ausgegeben. Die Maschinensteuerung 24 lässt danach die Maschine 16 wieder anlaufen.

Neben dem Wiederanlaufsignal ist in Weiterbildung der Erfindung ein Personenerkennungssignal ausgebbar, wenn die Bewegungserkennungseinheit 34 eine Person erkannt hat, also Bewegungen erkennt, die über der festgelegten Schwelle liegen.

Bevorzugt sind die Pufferspeichereinheit 28, die Voxelidentifikationseinheit 32 und die Bewegungserkennungseinheit 34 Teile der Steuer- und Auswerteeinheit 18. Das verkürzt nicht nur die Signalwege, sondern erhöht auch die Kompaktheit. Die Steuer- und Auswerteeinheit 18 kann zur weiteren Erhöhung der Kompaktheit in die 3-D-Kamera integriert sein.

Eine Aufteilung der Einheiten auf eine separate Sicherheitssteuerung und auf die 3-D Kamera ist, wie eingangs dargelegt, möglich.

In einer Ausführungsform der Erfindung umfasst die Sensoranordnung 10 einen Zusatzsensor, insbesondere einen Radarsensor, der nur Bewegungen von Objekten im Überwachungsbereich 22 erfasst. Dadurch kann die Funktionssicherheit, was gleichbedeutend ist mit Bewegungserkennungssicherheit, erhöht werden, weil ein Radarsensor mit anderer Messtechnik, also diversitär redundant, ebenfalls eine Bewegungserkennung durchführt.

Alle Komponenten der Sensoranordnung 10, und insbesondere die Steuer- und Auswerteeinheit 18 mit Pufferspeichereinheit 28, Voxelidentifikationseinheit 32 und Bewegungserkennungseinheit 34 sind bevorzugt fehlersicher ausgebildet.

## Patentansprüche

1. Sensoranordnung zum Absichern eines Überwachungsbereichs (22) an einer Maschine (16), die eine Gefahrenstelle definiert,
- mit mindestens einer fortlaufend 3D-Bilder erzeugenden Kamera (11) zur Erfassung von Objekten (14, 30) in dem Überwachungsbereich (22),
- mit einer Steuer- und Auswerteeinheit (18), die dafür ausgebildet ist, die Anwesenheit oder Position erfasster Objekte (14, 30) im Überwachungsbereich (22) zu bestimmen und im Falle einer gefährlichen Position eine sicherheitsgerichtete Reaktion der Maschine (16) einzuleiten,
**dadurch gekennzeichnet,**
- **dass** eine Pufferspeichereinheit (28) vorgesehen ist, zur Speicherung zuletzt aufgenommener Bilder,
- **dass** die Steuer- und Auswerteeinheit (18) ausgebildet ist, aus den gespeicherten Bildern eine 3-D Referenzkarte zu erstellen, wenn die sicherheitsgerichtete Reaktion eingeleitet wurde,
- und eine Voxelidentifikationseinheit (32) vorgesehen ist zur Kennzeichnung derjenigen Voxel im aktuellen 3-D Bild, deren Koordinaten von denen der entsprechenden Voxel der Referenzkarte um eine vorgegebene Distanz abweichen,
- und eine Bewegungserkennungseinheit (34) vorgesehen ist, in der die so identifizierten Voxel daraufhin untersucht werden, ob diese im Verlauf einer festgelegten Anzahl von weiteren aktuellen Bildern, Positionsänderungen aufzeigen, die über einer festgelegten Schwelle liegen
- und abhängig davon ein Wiederanlaufsignal für die Maschine (16) an einem Ausgang (26) ausgebbar ist.

2. Sensoranordnung nach Anspruch 1, wobei die Schwelle 10 mm beträgt.

3. Sensoranordnung nach Anspruch 1 oder 2, wobei die Steuer- und Auswerteeinheit ausgebildet ist, ein Personenerkennungssignal auszugeben, wenn von der Bewegungserkennungseinheit eine Bewegung erkannt wurde, also die Positionsänderungen über der festgelegten Schwelle liegen.

4. Sensoranordnung nach einem der vorhergehenden Ansprüche, **dadurch gekennzeichnet, dass** in der Bewegungserkennungseinheit die Absolutwerte der Positionsänderungen eines identifizierten Voxels von Bild zu Bild summiert werden und die Schwelle eine fest hinterlegte Voxelschwelle ist, um das Bewegungserkennungssignal (Personenerkennungssignal) auszugeben und/oder das Wiederanlaufsignal zu unterdrücken, wenn die Summe der Absolutwerte der Positionsänderungen oberhalb der Voxelschwelle liegt.

5. Sensoranordnung nach einem der vorhergehenden Ansprüche, **dadurch gekennzeichnet, dass** in der Bewegungserkennungseinheit die Absolutwerte der Positionsänderungen aller identifizierten Voxel von Bild zu Bild summiert werden und die Schwelle eine fest hinterlegte Summenschwelle ist, um das Bewegungserkennungssignal auszugeben und/oder das Wiederanlaufsignal zu unterdrücken, wenn die Summe der Absolutwerte der Positionsänderungen oberhalb der Summenschwelle liegt.

6. Sensoranordnung nach einem der vorhergehenden Ansprüche, **dadurch gekennzeichnet, dass** die 3-D Kamera ausgebildet ist, ein zusätzliches optisches Merkmal zu erfassen, das als zusätzliches Kriterium zur Identifikation der Voxel in der Voxelidentifikationseinheit dient.

7. Sensoranordnung nach einem der vorhergehenden Ansprüche, **dadurch gekennzeichnet, dass** die Pufferspeichereinheit, die Voxelidentifikationseinheit und die Bewegungserkennungseinheit Teile der Steuer- und Auswerteeinheit sind.

8. Sensoranordnung nach einem der vorhergehenden Ansprüche, die eine Sicherheitssteuerung (34) aufweist, in der zumindest ein Teil der Steuer- und Auswerteeinheit (24, 34) implementiert ist.

9. Sensoranordnung nach einem der vorhergehenden Ansprüche, **gekennzeichnet durch** einen zusätzlichen Sensor, insbesondere Radarsensor, der Bewegungen von Objekten im Überwachungsbereich erfasst.

10. Sensoranordnung nach einem der vorhergehenden Ansprüche, **dadurch gekennzeichnet, dass** die 3-D Kamera fehlersicher nach Sicherheitsnormen ausgebildet ist.

11. Sensoranordnung nach einem der vorhergehenden Ansprüche, **dadurch gekennzeichnet, dass** die Steuer- und Auswerteeinheit fehlersicher ausgebildet ist.

12. Sensoranordnung nach einem der vorhergehenden Ansprüche, **dadurch gekennzeichnet, dass** in der Pufferspeichereinheit N Bilder gespeichert sind und die Variable N gleich 10 oder größer ist.

13. Sensoranordnung nach einem der vorhergehenden Ansprüche, **dadurch gekennzeichnet, dass** die fortlaufende Erfassung von 3-D Bildern in einem festen zeitlichen Raster erfolgt.

14. Computerimplementiertes Verfahren zum Absichern eines Überwachungsbereichs (22) an einer Maschine (16), mit den Schritten
- fortlaufendes Erzeugen von 3-D Bildern mit mindestens einer Kamera (11) zur Erfassung von Objekten (14, 30) in dem Überwachungsbereich (22),
- Bestimmen der Position erfasster Objekte (14, 30) und
- im Falle einer gefährlichen Position Einleiten einer sicherheitsgerichteten Reaktion der Maschine (16),
**gekennzeichnet durch die weiteren Schritte,**
- Speichern zuletzt aufgenommener Bilder in einer Pufferspeichereinheit (28),
- Erstellen einer 3-D Referenzkarte aus den gespeicherten Bildern, wenn die sicherheitsgerichtete Reaktion eingeleitet wurde,
- in einer Voxelidentifikationseinheit (32), Kennzeichnen derjenigen Voxel im aktuellen 3-D Bild, deren Koordinaten von denen der entsprechenden Voxel der Referenzkarte um eine vorgegebene Distanz abweichen,
- in einer Bewegungserkennungseinheit (34), Untersuchen der so identifizierten Voxel daraufhin, ob diese im Verlauf einer festgelegten Anzahl von weiteren aktuellen 3-D Bildern, Positionsänderungen aufzeigen, die über einer festgelegten Schwelle liegen,
- Ausgeben eines Wiederanlaufsignals für die Maschine (16) an einem Ausgang (26), wenn die Positionsänderungen nicht über der festgelegten Schwelle liegen.

## Claims

1. A sensor arrangement for safeguarding a monitored zone (22) at a machine (16) that defines a hazard site, the sensor arrangement
- with at least one camera (11) continuously generating 3D images for the detection of objects (14, 30) in the monitored zone (22);
- with a control and evaluation unit (18) that is configured to determine the presence or position of detected objects (14, 30) in the monitored zone (22) and to initiate a safety-directed response of the machine (16) in the case of a hazardous position,
**characterized in that**
- a buffer memory unit (28) is provided for the storage of last recorded images;
- the control and evaluation unit (18) is configured to prepare a 3D reference map from the stored images when the safety directed response has been initiated;
- a voxel identification unit (32) is provided for the flagging of those voxels in the current 3D image whose coordinates differ by a specified difference from those of the corresponding voxels of the reference map; and
- a movement recognition unit (34) is provided in which the voxels thus identified are examined as to whether they display position changes that are above a fixed threshold in the course of a fixed number of further current images
- and independently thereof, a restart signal for the machine (16) can be output (26) at an output.

2. The sensor arrangement in accordance with claim 1, wherein the threshold amounts to 10 mm.

3. The sensor arrangement in accordance with claim 1 or 2, wherein the control and evaluation unit is configured to output a person recognition signal when a movement has been recognized by the movement recognition unit, that is the position changes are above the fixed threshold.

4. The sensor arrangement in accordance with any one of the preceding claims, **characterized in that** the absolute values of the position changes of an identified voxel from image to image are summed in the movement recognition unit and wherein the threshold is a fixedly stored voxel threshold to output the movement recognition signal (Person recognition signal) and/or to suppress the restart signal if the sum of the absolute values of the position changes is above the voxel threshold.

5. The sensor arrangement in accordance with any one of the preceding claims, **characterized in that** the absolute values of the position changes of all the identified voxels from image to image are summed in the movement recognition unit and that the threshold is a fixedly stored sum threshold to output the movement recognition signal and/or to suppress the restart signal if the sum of the absolute values of the position changes is above the sum threshold.

6. The sensor arrangement in accordance with any one of the preceding claims, **characterized in that** the 3D camera is configured to detect an additional optical feature that serves as an additional criterion for identifying the voxels in the voxel identification unit.

7. The sensor arrangement in accordance with any one of the preceding claims, **characterized in that** the buffer memory unit, the voxel identification unit, and the movement recognition unit are parts of the control and evaluation unit.

8. The sensor arrangement in accordance with any one of the preceding claims, that has a safety control (34) in which at least a part of the control and evaluation unit (24, 34) is implemented

9. The sensor arrangement in accordance with any one of the preceding claims **characterized by** an additional sensor, in particular a radar sensor, which detects movements of objects in the monitored zone.

10. The sensor arrangement in accordance with any one of the preceding claims, **characterized in that** the 3D camera is configured as failsafe according to safety standards.

11. The sensor arrangement in accordance with any one of the preceding claims, **characterized in that** the control and evaluation unit is configured as failsafe.

12. The sensor arrangement in accordance with any one of the preceding claims, **characterized in that** N images are stored in the buffer memory unit and the variable N is equal to 10 or more.

13. The sensor arrangement in accordance with any one of the preceding claims, **characterized in that** the continuous detection of 3D images takes place in a fixed time pattern.

14. Computer implemented method of safeguarding a monitored zone (22) at a machine (16), the method comprising the steps
- continuously generating 3D images with at least one camera (11) for the detection of objects (14, 30) in the monitored zone (22);
- determining the position of detected objects (14, 30) and
- in the case of a hazardous position, initiating a safety-directed response of the machine (16);
**characterized by** the further steps
- storing last recorded images in a buffer memory unit (28);
- preparing a 3D reference map from the stored images when the safety-directed response has been initiated;
- flagging those voxels in the current 3D image whose coordinates differ by a specified difference from those of the corresponding voxels of the reference map in a voxel identification unit (32);
- examining the voxels thus identified in a movement recognition unit (34) as to whether they display position changes that are above a fixed threshold in the course of a fixed number of further current 3D images;
- outputting a restart signal for the machine (16) at an output (26) when the position changes are not above the fixed threshold.

## Revendications

1. Dispositif capteur de sécurisation d'une zone à surveiller (22) sur une machine (16) qui définit un emplacement de danger,
- comprenant au moins une caméra (11), générant en continu des images 3D, pour détecter des objets (14, 30) dans la zone à surveiller (22),
- comprenant une unité de commande et d'évaluation (18) conçue pour déterminer la présence ou la position d'objets détectés (14, 30) dans la zone à surveiller (22) et pour, en cas de position dangereuse, déclencher une réaction de sécurité de la machine (16),
**caractérisé en ce que**
- il est prévu une unité de mémoire tampon (28) pour stocker les dernières images enregistrées,
- l'unité de commande et d'évaluation (18) est conçue pour créer une carte de référence 3D à partir des images stockées, lorsque la réaction de sécurité a été déclenchée,
- et il est prévu une unité d'identification de voxels (32) pour marquer les voxels de l'image 3D actuelle dont les coordonnées s'écartent d'une distance prédéfinie de celles des voxels correspondants de la carte de référence,
- et il est prévu une unité de détection de mouvement (34) dans laquelle les voxels ainsi identifiés sont examinés afin de savoir s'ils présentent, au cours d'un nombre défini d'autres images actuelles, des changements de position supérieurs à un seuil défini,
- et, en fonction de cela, un signal de redémarrage pour la machine (16) peut être émis à une sortie (26).

2. Dispositif capteur selon la revendication 1,
dans lequel le seuil est de 10 mm.

3. Dispositif capteur selon la revendication 1 ou 2,
dans lequel l'unité de commande et d'évaluation est conçue pour émettre un signal de détection de personne lorsqu'un mouvement a été détecté par l'unité de détection de mouvement, c'est-à-dire lorsque les changements de position sont supérieurs au seuil défini.

4. Dispositif capteur selon l'une des revendications précédentes, **caractérisé en ce que**, dans l'unité de détection de mouvement, les valeurs absolues des changements de position d'un voxel identifié sont additionnées d'une image à l'autre, et le seuil est un seuil de voxel stocké fixe, afin d'émettre le signal de détection de mouvement (signal de détection de personne) et/ou de supprimer le signal de redémarrage lorsque la somme des valeurs absolues des changements de position est supérieure au seuil de voxel.

5. Dispositif capteur selon l'une des revendications précédentes, **caractérisé en ce que**, dans l'unité de détection de mouvement, les valeurs absolues des changements de position de tous les voxels identifiés sont additionnées d'une image à l'autre, et le seuil est un seuil de somme stocké fixe, afin d'émettre le signal de détection de mouvement et/ou de supprimer le signal de redémarrage lorsque la somme des valeurs absolues des changements de position est supérieure au seuil de somme.

6. Dispositif capteur selon l'une des revendications précédentes, **caractérisé en ce que** la caméra 3D est conçue pour détecter une caractéristique optique supplémentaire qui sert de critère supplémentaire pour l'identification des voxels dans l'unité d'identification de voxels.

7. Dispositif capteur selon l'une des revendications précédentes, **caractérisé en ce que** l'unité de mémoire tampon, l'unité d'identification de voxels et l'unité de détection de mouvement font partie de l'unité de commande et d'évaluation.

8. Dispositif capteur selon l'une des revendications précédentes, comprenant une commande de sécurité (34) dans laquelle au moins une partie de l'unité de commande et d'évaluation (24, 34) est mise en œuvre.

9. Dispositif capteur selon l'une des revendications précédentes, **caractérisé par** un capteur supplémentaire, en particulier un capteur radar, qui détecte les mouvements d'objets dans la zone à surveiller.

10. Dispositif capteur selon l'une des revendications précédentes, **caractérisé en ce que** la caméra 3D est conçue de manière à être à sécurité intégrée conformément aux normes de sécurité.

11. Dispositif capteur selon l'une des revendications précédentes, **caractérisé en ce que** l'unité de commande et d'évaluation est conçue de manière à être à sécurité intégrée.

12. Dispositif capteur selon l'une des revendications précédentes, **caractérisé en ce que** N images sont stockées dans l'unité de mémoire tampon, la variable N étant égale ou supérieure à 10.

13. Dispositif capteur selon l'une des revendications précédentes, **caractérisé en ce que** l'acquisition continue d'images 3D s'effectue selon une trame temporelle fixe.

14. Procédé de sécurisation d'une zone à surveiller (22) sur une machine (16), mis en œuvre par ordinateur, comprenant les étapes consistant à
- générer en continu des images 3D à l'aide d'au moins une caméra (11) pour détecter des objets (14, 30) dans la zone à surveiller (22),
- déterminer la position des objets détectés (14, 30), et
- en cas de position dangereuse, déclencher une réaction de sécurité de la machine (16),
**caractérisé par** les étapes supplémentaires consistant à
- stocker les dernières images enregistrées dans une unité de mémoire tampon (28),
- créer une carte de référence 3D à partir des images stockées, lorsque la réaction de sécurité a été déclenchée,
- dans une unité d'identification de voxels (32), marquer les voxels dans l'image 3D actuelle dont les coordonnées s'écartent d'une distance prédéfinie de celles des voxels correspondants de la carte de référence,
- dans une unité de détection de mouvement (34), examiner les voxels ainsi identifiés afin de savoir s'ils présentent, au cours d'un nombre défini d'autres images 3D actuelles, des changements de position supérieurs à un seuil défini,
- émettre un signal de redémarrage pour la machine (16) à une sortie (26), lorsque les changements de position ne sont pas supérieurs au seuil défini.
